# EUROPEAN PATENT APPLICATION

(11) **EP 1 767 340 A1**
(43) Date of publication of application: **28.03.2007**
(21) Application number: 06075116.1
(22) Date of filing: 17.01.2006
(51) Int. Cl.: B32B 3/02, B32B 15/14, E04D 3/35

(54) **Method of and apparatus for manufacturing felt coated metal sheeting**

(30) Priority: 23.09.2005 IE 20050636; 23.09.2005 IE 20050637
(71) Applicant: Novaprofile Limited, Kilkenny (IE)
(72) Inventor: Duggan, Francis Joseph of Highfield, Kilkenny (IE)
(74) Representative: McCarthy, Denis Alexis

(57) **Abstract**

The apparatus (10) for manufacturing felt coated metal sheeting comprises a sheet metal uncoiler (20), a felt applicator (30), roll formers (40), a guillotine (50), a transfer conveyor (60), a felt lap heat applicator (70) and a stacking conveyor 80 for finished product. The felt applicator (30), comprises a mobile frame (31) on which is mounted a cradle (32) for supporting a roll of felt (33). The felt is provided with an adhesive backing film (47) which is removed from the roll of felt (33) and wound onto a plastic backing take off roll (34). At the felt lap heat applicator (70) the end of the sheet is clamped and heat is applied to the lap end of the sheet to melt the felt at the lap end to remove its absorbency.

## Description

The present invention relates to a method of manufacturing felt coated metal sheeting and to an apparatus for manufacturing felt coated metal sheeting. Metal sheeting of the type which the invention relates to is used in the construction of roofs and side walls of buildings, particularly non-insulated metal buildings, such as factories, farm buildings, sports halls and the like.

In non-insulated metal buildings, as the outside air is cold and there is a warmer air and humidity inside the building, condensation is created on the underside of the metal sheeting resulting in droplets of water dripping down. To overcome the problem, a layer of felt material is attached to one surface of the sheeting which is the inner surface in the building. The layer of felt is attached to the metal sheeting during the manufacturing process. However the current system of attaching a layer of felt to a sheeting is an expensive operation requiring the use of complex equipment.

It is an object of the invention to provide a method and apparatus for attaching a layer of felt to metal sheeting during manufacture which is simple and less expensive to implement.

A difficulty which arises with the use of felt coated metal sheeting is the end of the sheeting can absorb a considerable amount of outside water, for instance when the end lap is in contact with guttering and also on overlapped sections on roofs. To prevent this occurring it is recommended to apply a 10cm strip of clear water-based varnish on the end lap side of each metal sheet formed as part of the structure. This procedure must be done by the installers by hand and depending on weather conditions and other factors may or may not be done properly.

A further object of the invention is to provide a method and apparatus for treating the finished product as part of the manufacturing process so as to obviate the need for treatment on the construction site.

The invention is particularly defined in the appended claims which are incorporated into the description by reference thereto.

The present invention provides a method of manufacturing felt coated metal sheeting, the method comprising unrolling a sheet of felt from a roll of felt, removing a backing film from the felt to expose an adhesive layer, rolling the backing film onto a separate take up roll and applying the layer of felt to a metal sheet as it is being unrolled from a coil of sheet metal.

The present invention also provides an apparatus for manufacturing felt coated metal sheeting, the apparatus comprising means for unrolling a sheet of felt from a roll of felt, means for removing a backing film for the felt to expose an adhesive layer, means for rolling the backing film onto a separate take up roll and means for applying the layer of felt to a metal sheet as it is being unrolled from a coil of sheet metal.

The present invention also provides a method of manufacturing felt coated metal sheeting, the metal comprising clamping one end of a formed and felt coated metal sheet to expose a short lap end and applying heat to the exposed lap end to melt the felt coat.

The present invention also provides an apparatus for manufacturing felt coated metal sheeting, the apparatus comprising means for clamping one end of a formed and felt coated sheet to expose a short lap end and means for applying heat to the exposed lap end to melt the felt coat.

The heat may be taken from a number of heat sources such as gas burners, electric heaters and hot air appliances.

Ideally, the clamping means and heat applicator means are mounted on a moveable carriage.

The invention will hereinafter be more particularly described with reference to the accompanying drawings which show, by way of example only, one embodiment of apparatus for manufacturing felt coated metal sheeting according to the invention. In the drawings:

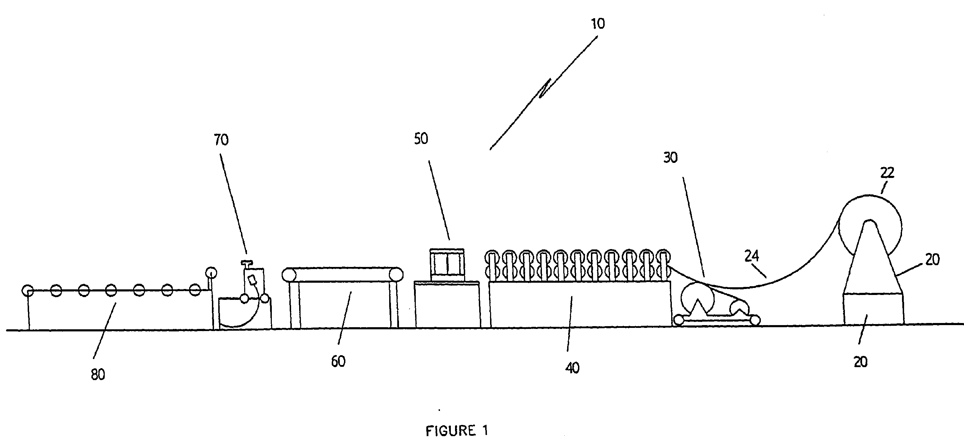

Figure 1 is a schematic side view of the apparatus in which the product flow goes from right to left from a sheet metal uncoiler, a felt applicator, a roll former, a guillotine, a transfer conveyor, a felt lap heat applicator and a stacking conveyor;
Figure 2 is a perspective view of the felt applicator; and
Figure 3 is a perspective view of the felt lap heat applicator.

Referring to the drawings, the apparatus 10 for manufacturing felt coated metal sheeting comprises a sheet metal uncoiler 20, a felt applicator 30, roll formers 40, a guillotine 50, a transfer conveyor 60, a felt lap heat applicator 70 and a stacking conveyor 80 for finished product.

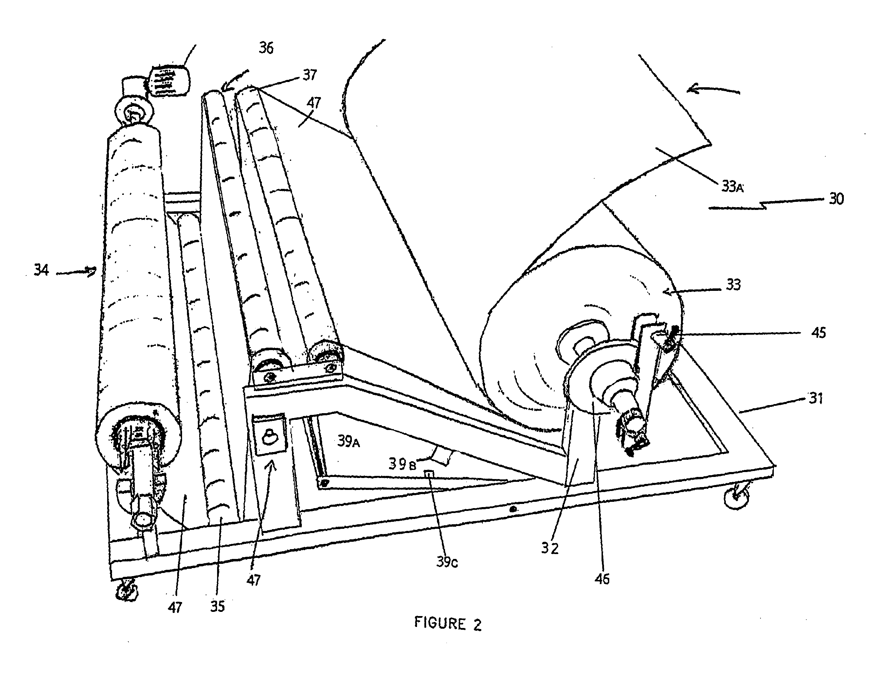

To commence the manufacturing process, a roll of steel sheeting 22 is mounted on the uncoiler 20 and the sheeting is fed through the felt applicator 30. Referring to Figure 2, the felt applicator 30, comprises a mobile frame 31 on which is mounted a cradle 32 for supporting a roll of felt 33. The felt is provided with an adhesive backing which allows the felt to adhere to the metal sheet 24 being uncoiled from the uncoiler 20. However before the felt can adhere to the metal sheeting 24, it is necessary to first remove a backing film 47. In the present invention, the film 47 is removed from the roll of felt 33 and wound onto a plastic backing take off roll 34. The plastic backing film 47 is guided through three guide rollers 35, 36 and 37. To compensate for the difference in speeds between the roll of felt 33 and the roll of sheet steel 22, an accumulator 38 is provided between the guide rollers 36 and 37 to take up the difference between the two rolls. The accumulator 38 includes a pivotally mounted contact lever 39a and an on/off switch 39b. When the control lever 39a contacts the switch 39b at contact point 39c the motor 34a on the take up roller 34 is operated to turn the roller to take off more backing film. When the contact lever 39a breaks contact with the switch brake 39b, the motor 34a stops rotating the take up roller 34. For safety reasons, a separate brake 45 is provided on the cradle 32 which acts against the disc 46 of the roll 33. Also for safety reasons an emergency stop 47 is provided on the felt applicator.

The metal sheet 24 with the felt 33a attached now goes through roll formers 40 to form the desired shape. The formed length of sheeting is cut to the required length by the guillotine 50 which moves at the speed of the line thus forming a flying guillotine 50. After being cut, the formed sheet with felt attached is deposited on the transfer conveyor 60 for the next stage of the process.

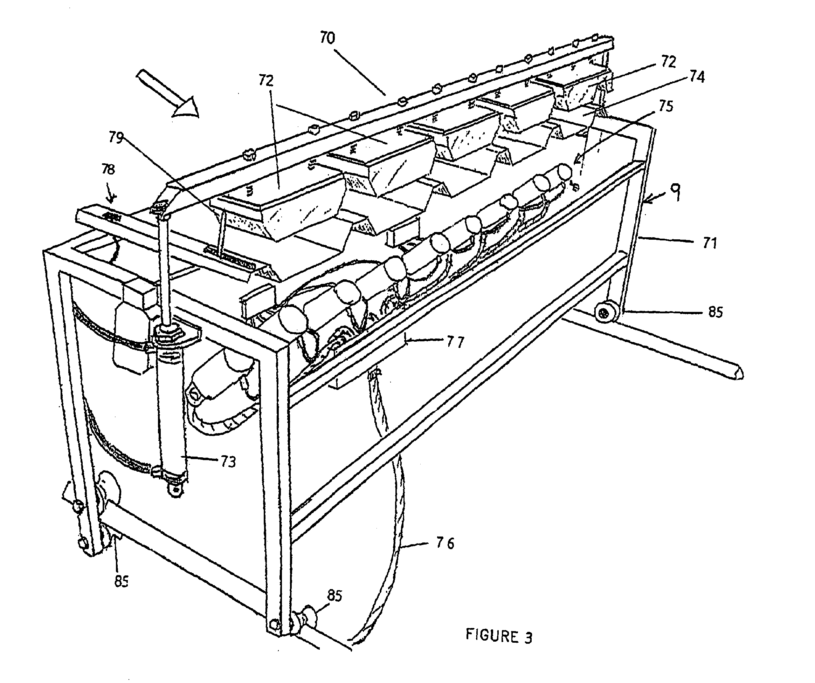

The final stage of the manufacturing process takes place at the felt lap heat applicator 70 where heat is applied to the lap end of the sheet to melt the felt at that end thereby removing the absorbency of the felt. Referring to Figure 3, the applicator 70 comprises a moveable frame 71 mounted on roller wheels 85 which enable the applicator to move at the same speed as the formed sheet is being deposited on the line. Mounted on the frame 71 are five clamps 72 which are operable by means of actuators 73 which bring the clamps 72 into engagement with profile holder 74 and therefore hold the formed sheet in relation to the frame 71 for the application of heat from the eight gas burners 75 which apply flame to the exposed end of the sheet extending from beyond the clamps 72. The gas is supplied to the burners 75 from a gas supply pipe 76 which feeds into a gas manifold 77. Each burner 75 is provided with its own ignition system. A photoelectric cell 78 is provided on the profile holder 74 and detects when the sheet metal is approaching. A switch 79 when hit by the formed sheet activates the clamping system. After the heat is applied for the required time, typically 1-2 seconds, the clamps 72 are released and the completed sheeting is conveyed to the stacking conveyor. The heat generated by the burners 75 is in the range of 40°C to 50°C. This temperature only melts the felt, does not cause it to burn and also does not do any damage to the paint on the other side of the sheet.

It is to be understood that the invention is not limited to the specific details described above which are given by way of example only and that various modifications and alterations are possible without departing from the scope of the invention as defined in the attached claims.

## Claims

1. A method of manufacturing felt coated metal sheeting, the method comprising clamping one end of a formed and felt coated metal sheet to expose a short lap end and applying heat to the exposed lap end to melt the felt coat.

2. A method of manufacturing felt coated metal sheeting as claimed in Claim 1, the method further comprising unrolling a sheet of felt from a roll of felt, removing a backing film from the felt to expose an adhesive layer, rolling the backing film onto a separate take up roll and applying the layer of felt to a metal sheet as it is being unrolled from a coil of sheet metal.

3. An apparatus for manufacturing felt coated metal sheeting, the apparatus comprising means for clamping one end of a formed and felt coated sheet to expose a short lap end and means for applying heat to the exposed lap end to melt the felt coat.

4. An apparatus as claimed in Claim 3, in which the heat application means is selected from one of a number of heat sources such as gas burners, electric heaters and hot air appliances.

5. An apparatus as claimed in Claim 3 or Claim 4, in which the clamping means and heat application means are mounted on a moveable carriage.

6. An apparatus for manufacturing felt coated metal sheeting as claimed in any one of Claims 3 to 5, the apparatus further comprising means for unrolling a sheet of felt from a roll of felt, means for removing a backing film for the felt to expose an adhesive layer, means for rolling the backing film onto a separate take up roll and means for applying the layer of felt to a metal sheet as it is being unrolled from a coil of sheet metal.

7. An apparatus as claimed in any one of Claims 3 to 6, additionally including a roll former, a guillotine, a transfer conveyor and a stacking conveyor.

8. An apparatus as claimed in Claim 6, including a mobile frame on which is mounted a cradle for supporting a roll of felt.

9. An apparatus as claimed in Claim 6 in which the means for rolling the backing film onto a separate take up roll comprises three guide rollers with an accumulator provided between two of the guide rollers to take up any difference in speed between the roll of felt and the roll of sheet steel.

10. An apparatus as claimed in Claim 4, in which the heat application means comprises a plurality of gas powered burners which are operable to apply flames to the exposed end of the sheet extending beyond the clamping means generating heat in the range of 40°C to 50°C so as to melt the felt coat.

11. A method of manufacturing felt coated sheeting, the method comprising unrolling a sheet of felt from a roll of felt, removing a backing film from the felt exposed an adhesive layer, rolling the backing film onto a separate take up roll and applying the layer of felt to a metal sheet as it is being unrolled from a coil of sheet metal.

12. An apparatus for manufacturing felt coated metal sheeting, the apparatus comprising means for unrolling a sheet of felt from a roll of felt, means for removing a backing film for the felt to expose an adhesive layer, means for rolling the backing film onto a separate take up roll and means for applying the layer of felt to a metal sheet as it is being unrolled from a coil of sheet metal.

13. An apparatus as claimed in Claim 12, including a mobile frame on which is mounted a cradle for supporting a roll of felt.

14. An apparatus as claimed in Claim 12 or Claim 13, in which the means for rolling the backing film onto a separate take up roll comprises three guide rollers with an accumulator provided between two of the guide rollers to take up any difference in speed between the roll of felt and the roll of sheet steel.

15. An apparatus for manufacturing felt coated metal sheeting comprising a sheet metal uncoiler, a felt applicator, a roll former, a guillotine, a transfer conveyor, a felt lap heat applicator and a stacking conveyor.
